# EUROPÄISCHE PATENTSCHRIFT

(11) **EP 0 796 187 B1**
(45) Veröffentlichungstag und Bekanntmachung des Hinweises auf die Patenterteilung: **05.08.1998**
(21) Anmeldenummer: 95942124.9
(22) Anmeldetag: 12.12.1995
(51) Int. Cl.: B60T 8/48, B60T 13/14

(54) **SCHLUPFGEREGELTE HYDRAULISCHE BREMSANLAGE**
ANTISKID HYDRAULIC BRAKING SYSTEM
SYSTEME DE FREINAGE HYDRAULIQUE ANTI PATINAGE

(30) Priorität: 22.12.1994 DE 4445860
(43) Veröffentlichungstag der Anmeldung: 24.09.1997
(73) Patentinhaber: ITT Automotive Europe GmbH, 60488 Frankfurt am Main (DE)
(72) Erfinder: STEFFES, Helmut, D-65795 Hattersheim (DE)
(86) Internationale Anmeldenummer: EP9504900
(87) Internationale Veröffentlichungsnummer: WO9619369

(56) Entgegenhaltungen:
- WO-A-91/18776
- DE-A- 3 034 628
- DE-A- 3 148 979
- DE-A- 3 538 284
- DE-A- 3 818 358
- DE-A- 4 020 450

## Beschreibung

Die vorliegende Erfindung betrifft eine schlupfgeregelte hydraulische Bremsanlage gemäß dem Oberbegriff des Anspruches 1.

Eine derartige Bremsanlage ist beispielsweise aus der WO 91/18776 bekannt. Der Reservespeicher der bekannten Bremsanlage dient lediglich dazu, ein zusätzliches Volumen zur Antriebsschlupfregelung bereitszustellen. Ein Schaltventil in der Pumpenspeiseleitung soll daher nur bei einer Antriebsschlupfregelung öffnen. Aber auch, wenn bei betätigtem Bremspedal ein zusätzlicher Bremsdruckaufbau durch die Pumpe erzielt werden soll, beispielsweise zur Fahrstabilitätsregelung, ist ein derartiger Reservespeicher sinnvoll.

Der vorliegenden Erfindung liegt die Aufgabe zugrunde, eine Bremsanlage der eingangs beschrieben Art bezüglich der Aufladung des Reservespeichers weiter zu verbessern.

Diese Aufgabe wird gelöst in Verbindung mit den kennzeichnenden Merkmalen des Anspruchs 1. Wenn also die Auffüllung des Reservespeichers durch einen Trennkolben erfolgt, der vom Hauptzylinderdruck zum Reservespeicher hin verschoben wird, kann bei einer blockiergeschützten Bremsanlage ohne Antriebsschlupfregelung die Rückförderpumpe nichtselbstansaugend ausgelegt sein.

Durch die Medientrennung zwischen Bremsleitung und Reservespeicher kann die mit dem Reservespeicher in Verbindung stehende Kammer der Trennkolbenanordnung durchaus direkt mit dem Druckmittelvorratsbehälter in Verbindung stehen, ohne daß ein offenes System entsteht. Eine Rückschlagventilanordnung kann dabei verhindern, daß Druckmittel vom Reservespeicher in den Vorratsbehälter abströmt.

Durch eine Federbeaufschlagung des Trennkolbens zu seiner ersten Kammer, die vom Hauptzylinderdruck beaufschlagt ist, füllt die reservespeicherseitige Kammer sich jedesmal selbsttätig nach, wenn der Hauptzylinder drucklos wird.

Eine gestufte Ausführung des Trennkolbens hat den Vorteil, daß eine Volumenübersetzung zwischen Hauptzylinder und Reservespeicher möglich ist. Dies bedeutet, daß nur ein geringes hauptzylinderseitiges Volumen ausreicht, um dem Reservespeicher ein wesentlich größeres Volumen zuzuführen.

Eine nähere Erläuterug des Erfindungsgedankens erfolgt nun anhand der Beschreibung eines Ausführungsbeispiels in einer Zeichnung.

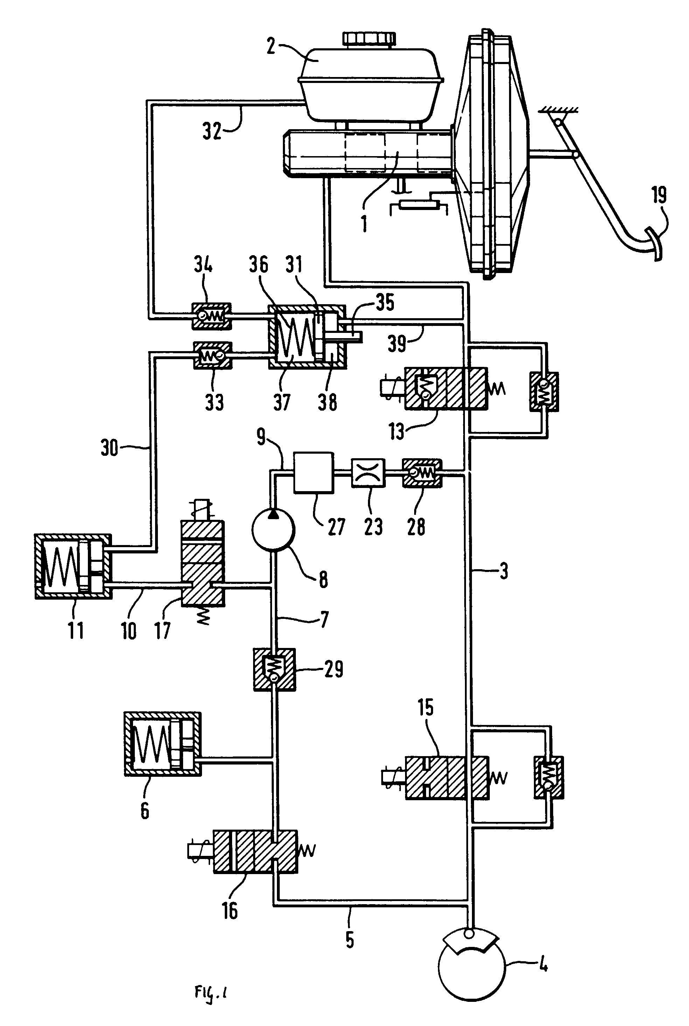

Die einzige Figur zeigt die hydraulischen Komponenten einer erfindungsgemäßen Bremsanlage, wobei nur einer von zwei Bremskreisen und in diesem auch nur eine Radbremse dargestellt ist.

Der Hauptzylinder 1 ist an den Vorratsbehälter 2 angeschlossen und über die Bremsleitung 3 mit der Radbremse 4 verbunden. Von der Radbremse 4 verläuft die Rücklaufleitung 5 zum Niederdruckspeicher 6. An den Niederdruckspeicher 6 ist über die Saugleitung 7 die Saugseite der Pumpe 8 angeschlossen. Auf den von der Druckseite der Pumpe 8 mündet die Druckleitung 9 in die Bremsleitung 3. Die Saugseite der Pumpe 8 ist weiterhin über eine Pumpenspeiseleitung 10 mit dem Reservespeicher 11 verbunden. In die Saugleitung 7 ist ein Vordruckrückschlagventil 29 eingefügt, das bei einer selbstansaugenden Pumpe 8 verhindert, daß Unterdruck im Niederdruckspeicher 6 aufkommt. Die Pumpenspeiseleitung 10 trägt ein Schaltventil 17. Zum Befüllen des Reservespeichers 11 ist eine Speicherladeleitung 30 angelegt, die den Reservespeicher 11 mit einem Trennkolben 31 verbindet. Vom Vorratsbehälter 2 zum Trennkolben 31 verläuft eine Nachlaufleitung 32.

Zwischen der Einmündung der Druckleitung 9 in die Bremsleitung 3 und der Radbremse 4 ist das Einlaßventil 15 in die Bremsleitung 3 eingefügt. Die Rücklaufleitung 5 ist mit einem Auslaßventil 16 versehen.

Zwischen Hauptzylinder 1 und der Einmündung der Druckleitung 9 in die Bremsleitung 3 weist die Bremsleitung 3 ein Trennventil 13 auf. Die Rücklaufleitung 5 ist mit einem Auslaßventil 16 versehen.

Während das Trennventil 13 und das Einlaßventil 15 stromlos geöffnete 2/2-Wegemagnetventile sind, werden das Auslaßventil 16 und das Schaltventil 17 von stromlos geschlossenen 2/2-Wegemagnetventilen gebildet. In die Druckleitung 9 der Pumpe 8 sind bekannte Mittel zur Geräuschdämpfung eingefügt, nämlich eine Dämpfungskammer 27, eine Drosselstelle 23 und ein Rückschlagventil 28, welches von der Pumpe 8 zur Bremsleitung 3 hin öffnet.

Der Trennkolben 31 trennt zwei Kammern 37 und 38, von denen die erste Kammer 37 mit dem Reservespeicher 11 in Verbindung steht, während die zweite Kammer 38 eine Betätigungsleitung 39 zur Bremsleitung 3 zwischen Hauptzylinder 1 und Trennventil 13 aufweist. Damit die Kammer 37 sich selbsttätig mit Druckmittel aus dem Vorratsbehälter 2 füllt, ist der Trennkolben von dieser Seite mit einer Druckfeder 36 belastet. Je ein Rückschlagventil 33 bzw. 34 in der Speicherladeleitung 30 und in der Nachlaufleitung 32 bwirkt, daß ein Druckmittelstrom jeweils nur vom Vorratsbehälter 2 zur Kammer 37 und von der Kammer 37 zum Reservespeicher 11 passieren kann. Der Trennkolben 31 ist gestuft ausgeführt, wobei auf der Seite der Kammer 38 ein Kolbenabschnitt 35 verringerten Durchmesser an die Atmosphäre geführt ist. Dies hat zur Folge, daß aus der ersten Kammer 37 bei einer Verschiebung des Trennkolbens 31 durch eine Betätigung des Bremspedals 19 mehr Druckmittel verdrängt wird, als der zweiten Kammer 38 zugeführt wird. Je größer die Wirkflächendifferenz zwischen den beiden Kammern 37 und 38 ist, desto weniger Hauptzylindervolumen ist zur Befüllung des Reservespeichers 11 notwendig.

Soll beispielsweise auf Glatteis angefahren werden, so reichen wenige Hübe des Bremspedals 19 aus, um vor Fahrtbeginn den Reservespeicher 11 aufzuladen. Das Volumen des Reservespeichers 11 kann dann auch zur Anfahrschlupfregelung herangezogen werden, wie es an sich aus dem Stand der Technik bekannt ist. Wenn nicht gleich bei Fahrtbeginn ein gefüllter Reservespeicher 11 zur Verfügung stehen muß, so erfolgt die Befüllung automatisch bei pedalbetätigten Bremsungen während der Fahrt.

Bei der erfindungsgemäßen Bremsanlage ist es ohne weiteres möglich, die Pumpe zur Antriebsschlupfregelung selbstansaugend auszulegen, da bei geöffnetem Schaltventil 17 über den Reservespeicher 11, die Speicherladeleitung 30, die erste Kammer 37 sowie die Nachlauf leitung 34 eine Saugverbindung zum Vorratsbehälter 2 besteht. Wie zuvor beschrieben, verhindert dabei das Vordruckrückschlagventil 29 einen Unterdruck im Niederdruckspeicher 6. Das Trennventil 13 wird zu einer Antriebsschlupfregelung immer geschlossen, kann jedoch auch bei einer blockiergeschützten Bremsanlage ohne Antriebsschlupfregelung Verwendung finden, wenn ein ruhiges Bremspedal erwünscht ist.

### Bezugszeichenliste

- 1: Hauptzylinder
- 2: Vorratsbehälter
- 3: Bremsleitung
- 4: Radbremse
- 5: Rücklaufleitung
- 6: Niederdruckspeicher
- 7: Saugleitung
- 8: Pumpe
- 9: Druckleitung
- 10: Pumpenspeiseleitung
- 11: Reservespeicher
- 13: Trennventil
- 15: Einlaßventil
- 16: Auslaßventil
- 17: Schaltventil
- 19: Bremspedal
- 23: Drosselstelle
- 27: Dämpfungskanal
- 28: Rückschlagventil
- 29: Vordruckrückschlagventil
- 30: Speicherladeleitung
- 31: Trennkolben
- 32: Nachlaufleitung
- 33: Rückschlagventil
- 34: Rückschlagventil
- 35: Kolbenabschnitt
- 36: Druckfeder
- 37: erste Kammer
- 38: zweite Kammer
- 39: Betätigungsleitung

## Patentansprüche

1. Schlupfgeregelte hydraulische Bremsanlage mit einem von einem Vorratsbehälter (2) gespeisten, pedalbetätigten Hauptzylinder (1) mit mindestens einer Radbremse (4), mit einer Bremsleitung (3) vom Hauptzylinder (1) zur Radbremse (4), mit einem Niederdruckspeicher (6) , mit einer Rücklaufleitung (5) von der Radbremse (4) zum Niederdruckspeicher (6), mit einer Pumpe (8), deren Saugseite über eine Saugleitung (7) mit dem Niederdruckspeicher (6) und deren Druckseite über eine Druckleitung (9) mit der Bremsleitung (3) in Verbindung steht, und mit einem Einlaßventil (15) in der Bremsleitung (3) und einem Auslaßventil (16) in der Rücklaufleitung (5) sowie mit einem über eine sperrbare Pumpenspeiseleitung (10) an die Saugleitung (7) angeschlossenen Reservespeicher (11), dadurch **gekennzeichnet,** daß der Reservespeicher (11) durch einen Trennkolben (31) aufladbar ist, welcher eine erste und eine zweite Kammer (37,38) voneinander trennt, von denen die erste Kammer (37) mit dem Reservespeicher (11) in Verbindung steht und die zweite Kammer (38) mit dem Hauptzylinder (1).

2. Bremsanlage nach Anspruch 1, dadurch **gekennzeichnet,** daß die Verbindung zwischen der ersten Kammer (37) und dem Reservespeicher (11) von einer Speicherladeleitung (30) mit einem zum Reservespeicher (11) hin durchlässigen Rückschlagventil (33) gebildet wird und daß die erste Kammer (37) über eine Nachlaufleitung (32) mit einer zur ersten Kammer (37) hin öffnenden Rückschlagventil (34) an den Vorratsbehälter (2) angeschlossen ist.

3. Bremsanlage nach einem der Ansprüche 1 oder 2, dadurch **gekennzeichnet,** daß der Trennkolben (31) zur zweiten Kammer (38) federbeaufschlagt ist.

4. Bremsanlage nach einem der vorhergehenden Ansprüche, dadurch **gekennzeichnet,** daß vom Hauptzylinder (1) her eine kleinere Fläche druckbeaufschlagbar ist als vom Reservespeicher (11) her.

5. Bremsanlage nach einem der vorhergehenden Ansprüche, dadurch **gekennzeichnet,** daß der Reservespeicher (11) zumindest immer dann zugeschaltet wird, wenn bei betätigtem Bremspedal (19) von der Pumpe (8) eine Druckerhöhung in der Bremsleitung (3) bewirkt werden soll.

## Claims

1. Hydraulic brake system with slip control, comprising a pedal-actuated master cylinder (1) that is supplied by a main reservoir (2), at least one wheel brake (4), a brake line (3) leading from the master cylinder (1) to the wheel brake (4), a low-pressure accumulator (6), a return line (5) that leads from the wheel brake (4) to the low-pressure accumulator (6), a pump (8) having its suction side connected to the low-pressure accumulator (6) by way of a suction line (7) and its pressure side connected to the brake line (3) by way of a pressure line (9), an inlet valve (15) in the brake line (3), and an outlet valve (16) in the return line (5), and an auxiliary reservoir (11) that is connected to the suction line (7) by way of a closable pump supply line (10),
**characterized** in that the auxiliary reservoir (11) can be charged by a separating piston (31) which separates a first and a second chamber (37, 38), wherein the first chamber (37) is connected to the auxiliary reservoir (11) and the second chamber (38) is connected to the master cylinder (1).

2. Brake system as claimed in claim 1,
**characterized** in that the connection between the first chamber (37) and the auxiliary reservoir (11) is provided by an accumulator charge line (30) with a non-return valve (33) that opens toward the auxiliary reservoir (11), and in that the first chamber (37) is connected to the main reservoir (2) by way of a supply line (32) with a non-return valve (34) that opens toward the first chamber (37).

3. Brake system as claimed in claim 1 or claim 2,
**characterized** in that the separating piston (31) is prestressed toward the second chamber (38) by a spring.

4. Brake system as claimed in any one of the preceding claims,
**characterized** in that a smaller surface can be charged with pressure from the master cylinder (1) than from the auxiliary reservoir (11).

5. Brake system as claimed in any one of the preceding claims,
**characterized** in that the auxiliary reservoir (11) is at least always activated when the pressure in the brake line (3) should be increased by the pump (8) while the brake pedal (19) is applied.

## Revendications

1. Système de freinage hydraulique à régulation du glissement, comprenant un maître-cylindre (1) actionné par une pédale et alimenté à partir d'un réservoir (2), au moins un frein de roue (4), une conduite de frein (3) menant du maître-cylindre (1) au frein de roue (4), un accumulateur basse pression (6), une conduite de retour (5) menant du frein de roue (4) à l'accumulateur basse pression (6), une pompe 8), dont le côté aspiration communique avec l'accumulateur basse pression (6) par une conduite d'aspiration (7) et dont le côté refoulement communique avec la conduite de frein (3) par une conduite de refoulement (9), et une valve d'entrée (15) située dans la conduite de frein (3) et une valve de sortie (16) située dans la conduite de retour (5), ainsi qu'un accumulateur de réserve (11) raccordé à la conduite d'aspiration (7) par une conduite d'alimentation de pompe (10) pouvant être bloquée, caractérisé en ce que l'accumulateur de réserve (11) peut être rempli au moyen d'un piston séparateur (31) qui sépare l'une de l'autre une première et une seconde chambres (37, 38) dont la première (37) communique avec l'accumulateur de réserve (11) et la seconde (38) avec le maître-cylindre (1).

2. Système de freinage suivant la revendication 1, caractérisé en ce que la liaison entre la première chambre (37) et l'accumulateur de réserve (11) est une conduite de remplissage d'accumulateur (30) comportant une valve antiretour (33) permettant un passage vers l'accumulateur de réserve (11) et en ce que la première chambre (37) est raccordée au réservoir (2) par une conduite de remplissage par aspiration (32) comportant une valve antiretour (34) s'ouvrant vers la première chambre (37).

3. Système de freinage suivant l'une des revendications 1 ou 2, caractérisé en ce que le piston séparateur (31) est soumis à l'action d'un ressort vers la seconde chambre (38).

4. Système de freinage suivant l'une des revendications précédentes, caractérisé en ce qu'une surface plus petite peut être soumise à l'action d'une pression à partir du maître-cylindre (1) qu'à partir de l'accumulateur de réserve (11).

5. Système de freinage suivant l'une des revendications précédentes, caractérisé en ce que l'accumulateur de réserve (11) est mis en circuit au moins dans tous les cas où, lors d'un actionnement de la pédale de frein (19), une augmentation de pression dans la conduite de frein (3) doit être provoquée par la pompe (8).
